# EUROPÄISCHE PATENTSCHRIFT

(11) **EP 2 627 553 B1**
(45) Veröffentlichungstag und Bekanntmachung des Hinweises auf die Patenterteilung: **22.07.2015**
(21) Anmeldenummer: 10773268.7
(22) Anmeldetag: 14.10.2010
(51) Int. Cl.: B62D 61/10, B60K 7/00, B60K 17/356

(54) **ANTRIEBSEINHEIT FÜR EIN TRANSPORTSYSTEM SOWIE TRANSPORTSYSTEM MIT DIESER ANTRIEBSEINHEIT**
DRIVE UNIT FOR A TRANSPORT SYSTEM AND TRANSPORT SYSTEM COMPRISING SAID DRIVE UNIT
ENSEMBLE D'ENTRAÎNEMENT POUR SYSTÈME DE TRANSPORT, ET SYSTÈME DE TRANSPORT DOTÉ DE CET ENSEMBLE D'ENTRAÎNEMENT

(43) Veröffentlichungstag der Anmeldung: 21.08.2013
(73) Patentinhaber: Wft Fertigungstechnik Gmbh & Co. KG, 92237 Sulzbach-Rosenberg (DE)
(72) Erfinder: WITTICH, Franz, 92274 Gebenbach (DE)
(74) Vertreter: Negendanck, Matthias
(86) Internationale Anmeldenummer: PCT/EP2010/065481
(87) Internationale Veröffentlichungsnummer: WO 2012/048750

(56) Entgegenhaltungen:
- DE-A1-102005 046 614
- DE-A1-102007 016 662
- DE-U1-202004 015 422
- DE-U1-202009 003 991
- US-A- 4 572 311
- US-A1- 2003 127 259

## Beschreibung

Die Erfindung betrifft eine Antriebseinheit zum Antrieb einer Transportplattform eines Transportsystems mit einer Antriebsaufnahme, mit einem Fahrgestell, wobei das Fahrgestell über die Antriebsaufnahme in dem Transportsystem, insbesondere um eine Lenkachse, lenkbar gelagert ist, und mit mindestens zwei Antriebsrädern, die in dem Fahrgestell drehbar gelagert sind, wobei die mindestens zwei Antriebsräder mit unterschiedlichen Antriebsdrehmomenten und/oder gegenläufig orientierten Antriebsdrehmomenten und/oder gegenläufig orientierten Drehrichtungen beaufschlagt werden können. Die Erfindung betrifft auch ein Transportsystem, welches mindestens eine derartige Antriebseinheit aufweist.

Bei dem Transport von insbesondere schweren Lasten werden vielfach spezielle Transportsysteme eingesetzt, die auch darauf ausgelegt sind, die Last eine beschränkte Strecke, wie zum Beispiel weniger als 500 m, zu transportieren. Derartige Transportsysteme müssen dazu somit nicht "autobahntauglich" sein, sondern können spezifisch auf diese kurzen Wege ausgelegt sein.

Beispielsweise betrifft die Offenlegungsschrift DE 1 755 126 ein Kraftfahrzeug mit einem kippbaren Behälter, welches vier angetriebene Radpaare aufweist, wobei die vorderen zwei Radpaare drehschemelgelenkt sind.

Die Druckschrift DE 42 046 42 C1 betrifft eine Antriebsanordnung für ein Kraftfahrzeug mit einer Triebachse, wobei ein Einzelrad eines Zwillingsradsatzes stetig angetrieben und das andere am Antrieb ankuppelbar ist, wobei das ankuppelbare Einzelrad über eine Viskosekupplung ständig mit einer Antriebsachse verbunden ist. Durch diese Antriebsordnung sollen Probleme bezüglich des Auftretens eines Schlupfes gelöst werden.

Die Druckschrift DE 60116571 T2 betrifft eine Zwillingsradanordnung für ein schweres Fahrzeug, wobei die Zwillingsradanordnung eine erste und eine zweite Radnabe aufweist, die benachbart zueinander angeordnet sind, und die ein Differenzialgetriebe aufweist, das die erste Radnabe und die zweite Radnabe verbindet, um eine relative Drehung zwischen den genannten Radnaben zu gestatten, wenn sich das Fahrzeug entlang einer gekrümmten Bahn bewegt.

Derartige Antriebskonzepte sind beispielsweise auch aus der Druckschrift DE 199 48 486 A1 bekannt, die in der Figur 2 ein Modul für ein Fahrzeug mit zwei Autoreifen zeigt, die mit unterschiedlichen Antriebsdrehmomenten angesteuert werden können, so dass sich das Modul um eine gemeinsame Hochachse dreht.

Die Druckschrift US 4 572 311 beschreibt ein Fahrgestell für Baumaschinen mit an zwei oder mehreren Achsen drehbar gelagerten und gegenläufig rotierbaren Reifen. Das Fahrgestell weist mindestens einen Fluidzylinder auf, der mindestens einem Reifen zugeordnet.

Die Druckschrift US 2003/0127259 A1 beschreibt eine Transportanordnung zur Bewegung über unebenes Gelände. Die Transportanordnung weist einen Rahmen mit mehreren Aktuatorbeinen auf, wobei an den Aktuatorbeiner ein Rad zur Vorwärts- oder Rückwärtsbewegung der Transportanordnung angeordnet ist. Die Transportanordnung umfasst eine Steuereinrichtung und eine Schwenkeinrichtung, wobei die Steuereinrichtung die Schwenkeinrichtung dazu ansteuert, das Rad auszulenken und eine Kurvenfahrt der Transportanordnung herbeizuführen. Die Transportanordnung ist dazu ausgebildet, eine dreidimensionale Bewegung durchzuführen.

In der Druckschrift DE 10 2007 016 662 A1, die wohl den nächstliegenden Stand der Technik bildet, ist ein omnidirektionales Fahrzeug, Fahrmodul und mobiler Industrieroboter beschrieben. Das omnidirektionale Fahrzeug umfasst einen Fahrzeugkörper, an dem mindestens ein omnidirektionales Rad mittels einer Einzelradaufhängung befestigt ist. Die Einzelradaufhängung kann eine Dämpfung aufweisen, die das omnidirektionale Rad im Betrieb zumindest teilsweise dämpft.

Der Erfindung liegt die Aufgabe zugrunde, eine Antriebseinheit für ein Transportsystem sowie ein entsprechendes Transportsystem vorzuschlagen, welches eine weitere Alternative zum Transport von insbesondere schweren Lasten bildet.

Diese Aufgabe wird durch eine Antriebseinheit mit den Merkmalen des Anspruches 1 sowie durch ein Transportsystem mit den Merkmalen des Anspruches 12 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Antriebseinheit für eine Transportplattform eines Transportsystems vorgeschlagen. Das Transportsystem und/oder die Transportplattform ist zum Transport für insbesondere schwere Lasten, also Lasten größer 1 t, vorzugsweise größer 5 t und insbesondere größer 30 t geeignet und/oder ausgebildet. Im Speziellen ist das Transportsystem bzw. die Transportplattform für kurze Wege ausgelegt, so dass dieses beispielsweise nicht der Straßenverkehrsordnung unterliegt. Bei anderen Ausführungsformen kann das Transportsystem aber auch für größere Strecken oder auch im Straßenverkehr, z.B. als Nutzfahrzeuge eingesetzt werden.

Die Antriebseinheit weist eine Antriebsaufnahme und ein Fahrgestell auf, wobei das Fahrgestell über die Antriebsaufnahme in der Transportplattform gelagert ist. Optional ergänzend kann zwischen Antriebsaufnahme und Fahrgestell und/oder zwischen Antriebsaufnahme und Transportplattform noch eine Federung und/oder eine Dämpfung oder andere Zwischenbaugruppen vorgesehen sein.

Die Antriebsaufnahme ist so ausgebildet, dass diese eine Schwenkung des Fahrgestells um einen Lenkbereich ermöglicht. Besonders bevorzugt handelt es sich bei dem Lenkbereich um eine Lenkachse, bei abgewandelten Ausführungsformen ist es auch möglich, dass eine oder die Lenkachse während der Schwenkung entlang einer Linie geführt oder gekippt wird, um eine komplexere Lenkbewegung darzustellen, so dass sich tatsächlich ein ausgedehnter Lenkbereich ergibt, um die das Fahrgestell geschwenkt wird. Insbesondere ist die Antriebsaufnahme passiv und/oder lenkmotorenfrei ausgebildet, so dass diese keine aktiven Drehmomente für die Schwenkung des Fahrgestells erzeugt und/oder einleitet.

Die Antriebseinheit weist mindestens zwei Antriebsräder auf, die in dem Fahrgestell drehbar gelagert sind und die die Antriebseinheit bzw. die Transportplattform bzw. das Transportsystem gegenüber einem Untergrund, wie zum Beispiel der Straße, abstützen. Die mindestens zwei Antriebsräder können mit unterschiedlichen Antriebsmomenten beaufschlagt werden. So kann ein Antriebsrad mit einem ersten Antriebsdrehmoment und ein anderes Antriebsrad mit einem anderen Antriebsmoment beaufschlagt werden, wobei sich die beiden Antriebsmomente von der Richtung und/oder vom Betrag unterscheiden. Insbesondere kann sich das Verhältnis der Antriebsdrehmomente im Betrieb über die Zeit ändern.

Besonders bevorzugt können die mindestens zwei Antriebsräder selektiv mit unterschiedlichen Antriebsdrehmomenten beaufschlagt werden, so dass die Antriebsdrehmomente innerhalb eines Antriebsdrehmomentbereichs frei ausgewählt werden können. Alternativ oder ergänzend können die mindestens zwei Antriebsräder mit gegenläufig orientierten Antriebsdrehmomenten, insbesondere mit gegenläufig orientierten Drehrichtungen beaufschlagt werden.

Im Rahmen der Erfindung wird vorgeschlagen, dass die Antriebseinheit neben dem Antrieb auch zur Lenkung der Transportplattform bzw. des Transportsystems durch die Beaufschlagung der mindestens zwei Antriebsräder mit unterschiedlichen Antriebsdrehmomenten Antriebsdrehmomenten und/oder gegenläufig orientierten Antriebsdrehmomenten und/oder gegenläufig orientierten Drehrichtungen ausgebildet ist.

Für den Antrieb bietet es sich nämlich an, die beiden Antriebsräder mit dem gleichen oder zumindest einem ähnlichen Antriebsdrehmoment zu beaufschlagen. Bei der Lenkung wird dagegen eine Relativdrehung der mindestens zwei Antriebsräder zueinander aufgrund der unterschiedlichen Antriebsdrehmomente ausgenutzt, so dass ein Schwenkmoment um die Lenkachse erzeugt wird, die zu einer Schwenkung des Fahrgestells um die Lenkachse und somit zu einer Neuausrichtung des Fahrgestells führt.

Bei einer gegenläufigen Drehrichtung der Antriebsräder ist es sogar möglich, die Antriebseinheit auf der Stelle zu drehen, um diese beispielsweise um +-90° umzuorientieren.

Damit setzt die Antriebseinheit eine Doppelfunktion um, nämlich den Antrieb und die Lenkung der Transportplattform bzw. des Transportsystems. Der Vorteil der Erfindung ist insbesondere darin zu sehen, dass der oder die Antriebsmotoren diese Doppelfunktion umsetzt und somit beispielsweise keine zusätzlichen Motoren für die Lenkungsfunktion benötigt werden.

Erfindungsgemäß ist vorgesehen, dass den mindestens zwei Antriebsrädern jeweils eine eigene Dämpfungs- und/oder Federungseinrichtung zugeordnet ist. Die Dämpfungs- und/oder Federungseinrichtung ist insbesondere separat zu den Antriebsrädern ausgeführt und kinematisch zwischen der Achse und/oder der Aufhängung des Antriebsrads und der Antriebsaufnahme angeordnet. Besonders bevorzugt sind die Dämpfungs- und/oder Federungseinrichtungen der beiden Antriebsräder parallel und zugleich unabhängig voneinander wirkend ausgebildet.

Insbesondere wird eine Einzelradaufhängung der Antriebsräder umgesetzt, die einen Betrieb der Antriebseinrichtung auch bei einem Untergrund mit Störkonturen oder Störkörper ermöglicht. Im speziellen, wenn die Antriebsräder als Hartwalzen ausgeführt sind, kann das Überfahren von Störkonturen zu Problemen führen, wenn das eine Antriebsrad die Störkontur überfährt und das andere Antriebsrad den Kontakt oder einen ausreichenden Kontakt mit dem Untergrund verliert, insbesondere so dass das andere Antriebsrad "in der Luft" hängt. In dieser Situation ist die Antriebseinheit nicht oder nur noch schwer kontrollierbar, da die Lenkfunktion beruhend auf den unterschiedlichen und/oder gegenläufigen Antriebsdrehmomenten der Antriebsräder gestört ist. Durch die Einzelradaufhängung der Antriebsräder und/oder der separaten Federung/Dämpfung kann diese Situation vermieden werden, da bei dem Überfahren der Störkontur das eine Antriebsrad unabhängig vom anderen Antriebsrad einfedern kann, so dass das andere Antriebsrad den ausreichenden Kontakt mit dem Untergrund behält.

Der mögliche Federungsweg in vertikaler Richtung wird bei bevorzugten Ausführungsformen kleiner als 10cm, insbesondere kleiner als 5 cm betragen, da z.B. bei dem Einsatz in Montagehallen keine größeren Störkonturen zu erwarten sind. Die Federungseinrichtung ist vorzugsweise als eine oder mehrere Stahlfedern ausgebildet, die Dämpfungseinrichtung kann als ein hydraulischer Dämpfer oder als ein Gasdämpfer ausgebildet sein.

Optional ergänzend kann die Antriebseinheit eine Niveauregelung aufweisen, welche besonders bevorzugt hydraulikbasiert realisiert ist. Insbesondere ist die Niveauregelung so ausgebildet, dass die mindestens zwei Antriebsräder einer Antriebseinheit gegeneinander in Bezug auf das Höhenniveau eingestellt werden können. Insbesondere ist die Niveauregelung auf Basis einer Luft- oder ölfederungen (Ölfeder) realisiert. Es kann sich um eine innere Niveauregelung handeln, wobei die erforderliche Verstellarbeit durch Federarbeit erzeugt wird oder um eine äußere Niveauregelung, wobei die Verstellarbeit durch fremde Energiequellen, Leitungen und Regelorgane bereitgestellt wird. Insbesondere ist die Niveauregelung ausgebildet, bei einem Überfahren einer Störkontur mit nur einem Antriebsrad das andere Antriebsrad auf den Untergrund zu senken, um einen ausreichenden Kontakt mit dem Untergrund zu unterstützen.

Als eine erste Anpassungsmaßnahme für den Einsatz mit schweren Lasten sind die Antriebsräder als Hartwalzen ausgebildet. Insbesondere weisen die Antriebsräder keine luftgefüllten Gummireifen oder Vollgummireifen auf. Dieser Ausgestaltung liegt die Überlegung zugrunde, dass für den Schwerlasteinsatz Gummireifen schlichtweg ungeeignet sind. Dagegen können Hartwalzen dauerhaft und verschleißarm eingesetzt werden. Die Hartwalzen können beispielsweise einen Hartkunststoffmantel insbesondere aus Polyurethan oder Polyamid aufweisen. Erfindungsgemäß beträgt der Shore A - Härtewert mehr als 85°. Die Hartwalzen sind jeweils für eine Tragfähigkeit größer als 500 kg, vorzugsweise größer als 1 t und insbesondere größer als 4t ausgelegt.

Unterstrichen wird der erfinderische Gedanke dadurch, dass die mindestens zwei Antriebsräder bevorzugt unabhängig voneinander mit unterschiedlichen Antriebsdrehmomenten beaufschlagt werden können und/oder getrennte mechanische Antriebsstränge aufweisen. Insbesondere sind die mindestens zwei Antriebsräder nicht durch ein Getriebe gekoppelt, sie sind vorzugsweise zueinander differentialfrei ausgebildet. Insbesondere ist jedem der mindestens zwei Antriebsräder mindestens ein eigener Motor zur Beaufschlagung mit dem Antriebsdrehmoment zugeordnet. Die Unabhängigkeit der mindestens zwei Antriebsräder wird z.B. dadurch erreicht, dass bei diesen die Drehmomente vom Motor bis auf die Straße unabhängig voneinander übertragen werden.

Die Antriebseinheit kann ein Direktantriebskonzept umsetzen, wobei beispielsweise die Motoren als Nabenmotoren ausgebildet sind. Alternativ können die Motoren über Getriebe mit den Antriebsrädern gekoppelt sein, wobei jedoch die Motoren und/oder die Getriebe vorzugsweise auf dem Fahrgestell angeordnet sind und/oder bei der Schwenkung um den Lenkbereich mitgenommen werden.

In einer besonders vorteilhaft an die schweren Lasten angepassten Ausführungsform sind die Antriebe als Zykloidantriebe ausgebildet. Die Zykloidantriebe weisen einen Motor und als Getriebestufe ein Zykloidgetriebe auf, welches in einer bevorzugten Ausbildung eine Kurvenscheibe, die über einen Exzenter angetrieben wird, und eine daran abwälzende Bolzenringeinrichtung umfasst. Die Kurvenscheibe wird durch den Exzenter derart bewegt, dass bei einer Umdrehung des Exzenters die Kurvenscheibe relativ zu der Bolzenringeinrichtung in Gegenrichtung zu der Drehrichtung des Exzenters um einen Bolzenplatz versetzt wird.

In einer einfachen Ausführungsform bildet der Exzenter den Antrieb und die Kurvenscheibe den Abtrieb der Getriebestufe.

Bei einer bevorzugten Weiterbildung der Erfindung ist jedoch der Exzenter als Antrieb und die Bolzenringeinrichtung als der Abtrieb ausgebildet. Die Bolzenringeinrichtung ist z.B. über ein Gehäuse der Getriebestufe mit dem Antriebsrad, insbesondere mit der Hartwalze drehfest gekoppelt. Durch diese Weiterbildung werden Probleme umgangen, die sich durch die schweren Lasten und damit der Verformung der Antriebsräder, insbesondere der Hartwalze, ergeben können. Während bei gängigen Nabenmotoren diese durch die Verformung ebenfalls oval verformt werden können und dadurch einem erhöhten Verschleiß unterliegen, können das Gehäuse und/oder die Bolzeneinrichtung eine derartige Verformung einfacher aufnehmen.

Bei einer möglichen Weiterbildung der Erfindung weist die Antriebseinheit ein oder mehrere Stützräder auf, wobei das bzw. die Stützräder gleichlaufend mit dem oder den Antriebsrädern angeordnet ist bzw. sind. Beispielsweise können die Antriebsräder auch jeweils mit einem zugeordneten Stützrad als Zwillingsräder ausgebildet sein, um höhere Lasten abtragen zu können.

Bei einer vorteilhaften Weiterbildung der Erfindung sind die Lenkachse und die mindestens zwei Antriebsräder derart angeordnet und/oder ausgebildet sind, dass durch ein gegenläufiges Drehen der mindestens zwei Antriebsräder relativ zum Untergrund eine Schwenkung des Fahrgestells um die Lenkachse erzeugt wird. Damit wird es der Antriebseinheit ermöglicht, die Orientierung des Fahrgestells insbesondere stehend zu ändern, indem die Antriebsräder gegenläufig zueinander rotiert werden. Konstruktiv kann die Weiterbildung beispielsweise umgesetzt werden, indem die Antriebsaufnahme als eine Lenkaufnahme zur Schwenkung des Fahrgestells um die Lenkachse ausgebildet ist, wobei die Lenkachse mittig, zwischen den mindestens zwei Antriebsrädern verläuft, so dass bei einer Schwenkung des Fahrgestells die mindestens zwei Antriebsräder einen gedachten Durchstoßpunkt der Lenkachse auf dem Boden, vorzugsweise mit gleichem Radius, umlaufen bzw. umfahren.

In dieser Ausgestaltung ist es möglich, die Antriebseinheit in der Transportplattform im Stand oder in der Fahrt für eine nächste Linearbelegung der Transportplattform zu orientieren, so dass die Lenkfunktion der Transportplattform umgesetzt wird.

Bei einer bevorzugten Weiterbildung der Erfindung weist die Antriebseinheit eine optionale Feststelleinrichtung auf, die ausgebildet ist, die Schwenkung des Fahrgestells um die Lenkachse zu hemmen, insbesondere zu blockieren. Diese Feststelleinrichtung kann beispielsweise als eine Bremseinrichtung ausgebildet sein. Die Feststellung kann elektromechanisch beispielsweise über eine rastende oder eine andere Mechanik im Fahrgestell realisiert werden.

Durch die Feststelleinrichtung kann die Positionierung und/oder Ausrichtung des Fahrgestells und somit der Antriebsräder im Fahrgestell relativ zu der Transportplattform fixiert werden. Vorteilhaft kann die Feststelleinrichtung z.B. eingesetzt werden, wenn eine Lenkbewegung nicht notwendig ist und eine Linearbewegung der Antriebseinheit erreicht werden soll. Im Betrieb kann vorgesehen sein, dass die Antriebseinheit zunächst durch relative Rotation der Antriebsräder zueinander eine vorgegebene Orientierung erreicht und dann über die Feststelleinrichtung diese Orientierung fixiert wird. Nachfolgend wird dann durch eine gleichgerichtete Rotation der Antriebsräder die Transportplattform in die gewählte Orientierung bewegt. Es ist auch möglich, dass die Feststelleinrichtung im Störfall aktiviert wird, um zumindest für grundlegende Verfahraktionen bewegungsfähig zu bleiben.

Besonders bevorzugt ist es, wenn die Antriebseinheit einen Drehwinkelgeber aufweist, der ausgebildet ist, den Lenkwinkel der Lenkachse zu erfassen. Der Drehwinkelgeber ist somit der Ist-Wert-Geber für die Steuerung bzw. die Lenkung der Antriebseinheit bzw. der Transportplattform. Es kann sich hierbei um ein inkrementelles System handeln, wobei eine Referenzdrehung zur Initialisierung des Drehwinkelgebers durch eine Schwenkung oder Rotation des Fahrgestells durch ein gegenläufiges Rotieren der Antriebsräder umgesetzt wird. Bevorzugt ist es jedoch, wenn der Drehwinkelgeber als ein absoluter Drehwinkelgeber ausgebildet ist, um eine derartige Referenzfahrt vermeiden zu können.

Der mögliche Lenkwinkel kann wahlweise begrenzt sein, zum Beispiel auf einen Gesamtlenkwinkelbereich von keiner 180°, insbesondere kleiner als 90°, oder es können Schwenkungen bis 360° oder sogar Rotationen größer 360° (Endlosdrehungen) durchgeführt werden. Im letztgenannten Fall ist es bevorzugt, wenn Energiezuführungen für die Motoren der Antriebsräder über eine Drehdurchführung in der Antriebsaufnahme durchgeschleift werden.

In einer bevorzugten Ausführungsform umfasst die Antriebseinheit eine Steuereinrichtung und/oder ist mit dieser koppelbar, wobei die Steuereinrichtung programmtechnisch und/oder schaltungstechnisch ausgebildet ist, die Antriebseinheit für einen Antriebsvorgang und für einen Lenkvorgang der Transportplattform anzusteuern. Insbesondere ist die Steuereinrichtung ausgebildet, jedes der Antriebsräder selektiv anzusteuern, zum Beispiel indem jeder Motor bzw. jede Motorengruppe, der dem jeweiligen Antriebsrad zugeordnet ist, einzeln angesteuert wird. Bei der Ansteuerung kann es sich auch um eine Regelung, insbesondere Lageregelkreis handeln. Derartige Ansteuerungssysteme sind beispielsweise unter dem Namen X-By-Wire oder Drive-By-Wire bekannt. In dieser Ausgestaltung übernimmt die Steuereinrichtung die Aufgabe der Synchronisation der Antriebsräder eines Fahrgestells, so dass ein virtuelles oder elektronisches Differential gebildet ist. Die Übertragung der Steuersignale kann beispielsweise über einen Bus, insbesondere CAN-Bus oder FlexRay-Bus, erfolgen. Besonders robust kann die Antriebseinheit umgesetzt werden, wenn die Steuereinrichtung mit der mechanischen Realisierung in Form der Einzelradaufhängung abgestimmt ist.

Es ist auch möglich dass die Steuereinrichtung als eine Mastersteuerung für eine oder mehrere Antriebseinheiten einer Transportplattform oder eines Transportsystems ausgebildet ist, wobei den Motoren, vorzugsweise allen Motoren, jeweils eine Slave-Einheit zugeordnet ist, die die lokale Kontrolle, insbesondere Steuerung oder Regelung, des Motors übernimmt. Bei manchen Ausführungsformen kann die Slave-Einheit und der Motor eine Einbaueinheit bilden und somit insbesondere einen "intelligenten" Motor repräsentieren.

Ein weiterer Gegenstand der Erfindung betrifft ein Transportsystem mit den Merkmalen des Anspruches 12. Das Transportsystem weist mindestens eine Transportplattform auf, wobei die Transportplattform mindestens eine der Antriebseinheiten der vorhergehenden Ansprüche bzw. wie sie zuvor beschrieben wurde, umfasst. Insbesondere wird die Transportplattform durch mindestens eine der Antriebseinheiten angetrieben und gelenkt. Die Transportplattform ist vorzugsweise als eine funktionelle Einrichtung zu verstehen, welche die Aufnahme oder Auflage einer Last erlaubt.

Es ist z.B. möglich, dass die Transportplattform und/oder das Transportsystem als ein Gabelstapler, Führerloses Transportsystem (FTS), Schwertransporter, Nutzfahrzeug, LKW ausgebildet ist.

Bei einer besonders bevorzugten Ausführungsform ist die Transportplattform als ein Niederflurfahrzeug oder dessen Rahmen bzw. Fahrwerk ausgebildet, wobei die Höhe des Niederflurfahrzeugs bevorzugt kleiner als 100 cm, vorzugsweise kleiner als 75 cm und insbesondere kleiner als 55 cm ist. Die Transportplattform weist bei einer bevorzugten Ausführungsform vier der Antriebseinheiten auf, welche die Lenk- und Antriebsfunktion umsetzen. Bei anderen Ausführungsformen weist die Transportplattform nur zwei derartige Antriebseinheiten auf, wobei die Transportplattform durch zwei passive Stützradeinheiten abgestützt ist. Die zwei Antriebseinheiten können bei bevorzugten Ausführungsformen einer Querachse oder bei anderen Ausführungsformen diagonal, also zwei unterschiedlichen Querachsen zugeordnet sein.

Bei einer bevorzugten Ausgestaltung der Erfindung sind die Antriebseinheiten der Transportplattform ausgebildet, unabhängig voneinander, insbesondere mechanische entkoppelt, insbesondere um die Lenkachse zu schwenken. Bei dieser bevorzugten Ausgestaltung kann somit eine der Antriebseinheiten unabhängig von den anderen Antriebseinheiten gedreht werden. Es ist somit auch möglich, dass bei einer Umorientierung der geplanten Bewegungsrichtung der Transportplattform im Stand die Antriebseinheiten sequentiell oder gleichzeitig ausgerichtet werden.

Insbesondere ist die Transportplattform ausgebildet, durch Umorientierung der erfindungsgemäßen Antriebseinheiten von einem Geradeauslauf in eine senkrecht dazu orientierte Bewegungsrichtung zu wechseln. Diese Flexibilität in Bezug auf die Fahrtrichtung hat z.B. den Vorteil, dass eine Transportplattform in einer Reihe von Transportplattformen, deren Bewegungsrichtung in Richtung der Reihe verläuft, durch Umorientierung der Antriebseinheiten in einer Bewegungsrichtung senkrecht zu der Erstreckungsrichtung der Reihe auszukoppeln.

In einer bevorzugten Weiterbildung ist die Transportplattform zum Transport von Lasten mit bis zu 35 t oder 40 t ausgebildet.

Mit dem Ziel die Anwendungsbreite des Transportsystems zu verbessern ist es bevorzugt, wenn die Transportplattform eine autarke Stromversorgung, insbesondere eine mobile Energiequelle, z.B. ein Akkupack aufweist. Die Energiequelle ist vorzugsweise so dimensioniert, dass diese für eine Fahrstrecke von mindestens 1000 m, vorzugsweise mindestens 2000 m und im speziellen mindestens 3000 m ausgelegt ist. Allerdings ist die Energiequelle vorzugsweise mit einer Maximalkapazität für eine Wegstrecke von weniger als 10000 m, vorzugsweise weniger als 8000 m und im speziellen weniger als 5000 m ausgebildet.

Besonders bevorzugt ist die Transportplattform über eine kabellose oder kabelgebundene Fernsteuerung steuerbar.

Bei einer möglichen Ausführungsform weist die Transportplattform ergänzend passive Stützradeinheiten auf, welche sowohl schwenkbar als auch schwenkfest an der Transportplattform angebracht sein können. Die Stützradeinheiten können insbesondere als Lenkrollen oder Bockrollen ausgebildet sein. Lenkrollen sind vertikal schwenkbar und machen Maschinen, Geräte etc. manövrierfähig. Bockrollen sind nicht schwenkbar und geben Maschinen, Geräten etc. die Richtungsstabilität.

Bei einer bevorzugten Ausführungsform der Erfindung weist die Transportplattform mehrere Antriebseinheiten auf, welche gemeinsam durch eine Steuereinrichtung angesteuert werden, wobei die Steuereinrichtung sowohl die Antriebsfunktion als auch die Lenkfunktion des Transportsystems über die Antriebseinheiten steuert. Beispielsweise kann vorgesehen sein, dass die Transportplattform vier derartige Antriebseinheiten mit insgesamt acht angetriebenen Antriebsrädern aufweist, wobei die Steuereinrichtung programmtechnisch und/oder schaltungstechnisch zur Ansteuerung dieser acht Antriebsräder ausgebildet ist. Es ist bei einer anderen Ausführung auch möglich, dass die Transportplattform nur eine einzige derartige Antriebseinheit aufweist und zwei passive Stützradeinheiten aufweist, so dass hier die Transportplattform als ein Dreirad mit einer eingeschränkten Manövrierfähigkeit ausgeführt ist.

Bei einer vorteilhaften Weiterbildung der Erfindung weist das Transportsystem mehrere Transportplattformen, wie sie zuvor beschrieben wurden, auf, wobei die Transportplattformen miteinander zu einer Großplattform koppelbar sind. Das Transportsystem bildet somit einen modularen Baukasten mit einer beliebigen Auswahl an Transportplattformen, die nach Bedarf miteinander zu der Großplattform gekoppelt werden können. Zur Steuerung der Großplattform ist vorgesehen, dass eine der Steuereinrichtungen als Mastersteuereinrichtung ausgebildet und/oder eingesetzt wird, so dass diese die Antriebseinheiten in den mehreren gekoppelten Transportplattformen für einen Antriebsvorgang und für einen Lenkvorgang der Großplattform ansteuert.

Der Vorteil dieser Ausgestaltung ist darin zu sehen, dass je nach Größe oder Masse der zu transportierenden Last mehrere Transportplattformen bedarfsgerecht miteinander gekoppelt werden können. Zum einen erfolgt eine mechanische Kopplung der Transportplattformen, so dass diese konstruktiv die Großplattform bilden. Zum anderen werden die Antriebseinheiten steuerungstechnisch in der Steuereinrichtung gekoppelt, so dass die Großplattform, zum Beispiel wie eine einzelne Transportplattform, gesteuert werden kann. Statt einer mechanischen Kopplung ist auch eine virtuelle Kopplung möglich, wobei die Transportplattformen nicht unbedingt mechanisch zueinander gekoppelt sein müssen, sondern nur deren Relativposition bekannt sein müssen. Beispielsweise kann ein Großbauteil von mindestens zwei, insbesondere mehreren Transportplattformen, welche unverbunden und/oder distanziert und/oder separiert zueinander angeordnet sind, aufgenommen sein, welche durch die virtuelle Kopplung wie eine Großplattform angesteuert werden können.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine schematische Seitenansicht einer Antriebseinheit als ein erstes Ausführungsbeispiel der Erfindung;
Figur 2 eine alternative Ausführungsform der Antriebseinheit als in der Figur 1;
Figur 3 eine dritte Ausführungsalternative der Antriebseinheit in der Figur 1;
Figur 4 eine vierte Ausführungsalternative der Antriebseinheit in einer schematischen dreidimensionalen Darstellung;
Figur 5 eine fünfte Ausführungsform der Antriebseinheit ebenfalls in einer schematischen dreidimensionalen Darstellung;
Figur 6 eine Unteransicht einer Transportplattform mit der Antriebseinheit gemäß der Figur 3;
Figur 7 eine schematische dreidimensionale Darstellung einer Transportplattform mit mehreren Antriebseinheiten gemäß der Figur 4;
Figur 8 eine etwas abgewandelte Ausführungsform der Transportplattform in der Figur 7;
Figuren 9a-e die Transportplattform der vorherigen Figuren i verschiedenen Lenkpositionen;
Figur 10 eine schematische dreidimensionale Draufsicht auf eine Antriebseinheit als ein weiteres Ausführungsbeispiel der Erfindung;
Figur 11 eine schematische dreidimensionale Darstellung einer Antriebseinheit als ein weiteres Ausführungsbeispiel der Erfindung;
Figur 12 die Antriebseinheit in der Figur 11 in einer Draufsicht von vorne;
Figur 13 die Antriebseinheit der vorhergehenden Figuren in einer Draufsicht von der Seite;
Figur 14 ein Niederflurfahrzeugrahmen mit den Antriebseinheiten der vorhergehenden Figuren.

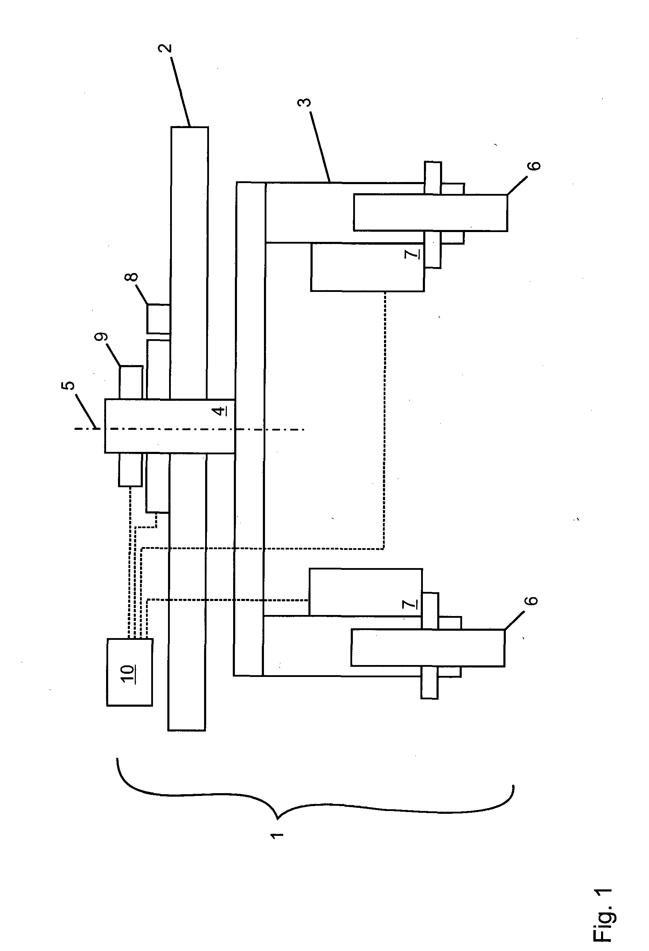

Die Figur 1 zeigt in einer schematischen Seitenansicht eine Antriebseinheit 1, welche in einer Transportplattform 2 angeordnet ist und die ein Fahrwerk für die Transportplattform 2 bildet. Die Transportplattform 2 ist nur abschnittsweise dargestellt und kann mehrere der Antriebseinheiten 1 umfassen. Die Transportplattform ist für einen Transport von schweren Lasten im Multi-Tonnen-Bereich ausgelegt und kann einen beliebigen Aufbau tragen.

Die Antriebseinheit 1 umfasst ein Fahrgestell 3, welches über eine Antriebsaufnahme 4 um eine Lenkachse 5 drehbar oder schwenkbar relativ zu der Transportplattform 2 gelagert ist. Die Lenkachse 5 erlaubt eine Verschwenkung des Fahrgestells 3 relativ zu der Transportplattform 2 um einen Schwenk- oder Lenkwinkel. An dem Fahrgestell 3 sind zwei Antriebsräder 6 voneinander beabstandet, jedoch parallel zueinander angeordnet, welche über jeweils einen eigenen Motor 7 angetrieben werden können. Die Motoren 7 können z. B. über ein Getriebe, einen Riemen oder eine Kette mit den Antriebsrädern 6 gekoppelt sein, auch der Einsatz von Direktantriebsmötoren, insbesondere Nabenmotoren ist möglich. In der gezeigten Draufsicht ist die Lenkachse 5 zwischen den beiden Antriebsrädern 6 und parallel zu diesen ausgerichtet angeordnet. Es ist darauf hinzuweisen, dass die Motoren 7 nur die Übertragung eines Antriebsdrehmoment auf die Antriebsräder 6 ermöglichen, die Antriebsaufnahme 4 dagegen passiv ausgebildet ist, insbesondere ist sie motorenfrei bezüglich der Schwenkbewegung realisiert.

An der Antriebsaufnahme 4 befindet sich eine Feststelleinrichtung 8, die ausgebildet ist, die Schwenkbewegung des Fahrgestells 3 um die Lenkachse 5 zu blockieren. Ferner ist ein Drehwinkelgeber 9 an der Antriebsaufnahme angesetzt, welcher den Schwenkwinkel erfasst.

Die Steuerung der Motoren 7 übernimmt eine Steuereinrichtung 10, welche als Eingangsgröße den aktuellen Schwenkwinkel von dem Drehwinkelgeber erhält und welche die Antriebsräder 6 gemäß der gewünschten Betriebsart: Geradeausfahrt, Kurvenfahrt oder Drehung auf der Stelle ansteuert. Insbesondere ist zwischen den zwei Antriebsrädern 6 kein Differential oder eine andere getriebeähnliche Kopplung vorgesehen. Dagegen übernimmt die Steuereinrichtung 10 die Synchronisation der beiden Motoren 7 ggfs. über den Einsatz von den Motoren 7 individuell zugeordneten Slave-Steuereinrichtungen (nicht gezeigt) und wirkt dabei als ein virtuelles oder elektronisches Getriebe. Derartige Antriebskonzepte sind beispielsweise als X-By-Wire oder Drive-By-Wire bekannt. Die Übertragung der Steuersignale von der Steuereinrichtung zu den Motoren 7 kann beispielsweise über ein Bussystem, insbesondere einen CAN-Bus oder FlexRay-Bus, erfolgen.

Funktionell betrachtet können die beiden Antriebsräder 6 im Gleichlauf einen Antrieb für die Transportplattform 2 bilden, wobei die Antriebsräder 6 gleichlaufend die Transportplattform 2 in die Blattebene hinein oder aus der Blattebene hinaus antreiben. Bei unterschiedlichen Drehmomenten oder Drehgeschwindigkeiten richtet sich das Fahrgestell 3 um die Lenkachse 5 selbsttätig oder frei aus und die Transportplattform 2 wird entlang einer Kurvenbahn angetrieben. Ein Spezialfall bildet ein gegenläufiges Antreiben der Antriebsräder 6, wobei diese dann das Fahrgestell 3 um die Lenkachse 5 drehen. Bei diesem Spezialfall kann somit das Fahrgestell 3, ohne die Transportplattform 2 zu bewegen, orientiert bzw. ausgerichtet werden. Insbesondere kann das Fahrgestell 3 um 90° gedreht bzw. ausgerichtet werden. Vorzugsweise kann die Ausrichtung in einem Bereich +-130° erfolgen.

Die Steuereinrichtung 10 ist zudem ausgebildet, die Feststelleinrichtung 8 anzusteuern, wenn das Fahrgestell 3 eine gewünschte Orientierung bzw. einen gewünschten Lenkwinkel erreicht hat. Die Lenkbewegungen und auch die Antriebsbewegungen können durch die selektive Ansteuerung der Antriebsräder 6 verschleißarm durchgeführt werden.

Bei einem funktionellen Versagen von einem der Motoren 7 kann auch ein Notbetrieb umgesetzt werden, indem die Feststelleinrichtung 8 gelöst wird, der verbleibende Motor 7 das Fahrgestell 3 um die Lenkachse 5 dreht, nachfolgend die Festelleinrichtung 8 aktiviert wird und die aktuelle Ausrichtung oder Orientierung fixiert. Auch wenn nur der verbleibende Motor 7 aktiviert wird, wird die Transportplattform 2 in die fixierte Richtung angetrieben.

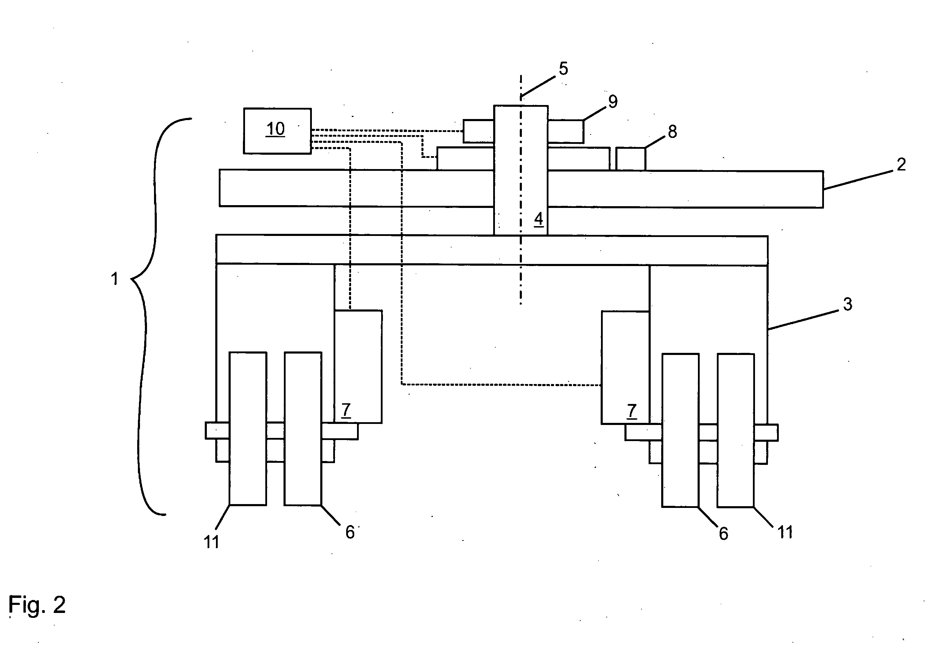

Die Figur 2 zeigt eine abgewandelte Ausführungsform der Erfindung, wobei gleiche Bezugszeichen die gleichen Teile bezeichnen. Im Gegensatz zu der Figur 1 zeigt die Antriebseinheit 1 in der Figur 2 zusätzliche Stützräder 11, welche jeweils den Antriebsrädern 6 zugeordnet sind, so dass sich jeweils Zwillingsräder bilden. Die Stützräder 11 werden nur passiv mitgeführt, sind somit nicht durch die Motoren 7 angetrieben. Ist eine zusätzliche Antriebskraft notwendig, so können statt der Stützräder 11 oder ergänzend dazu weitere Antriebsräder 6 als Zwillingsräder angesetzt werden oder einem Antriebsrad 6 mehrere Motoren 7 zugeordnet werden.

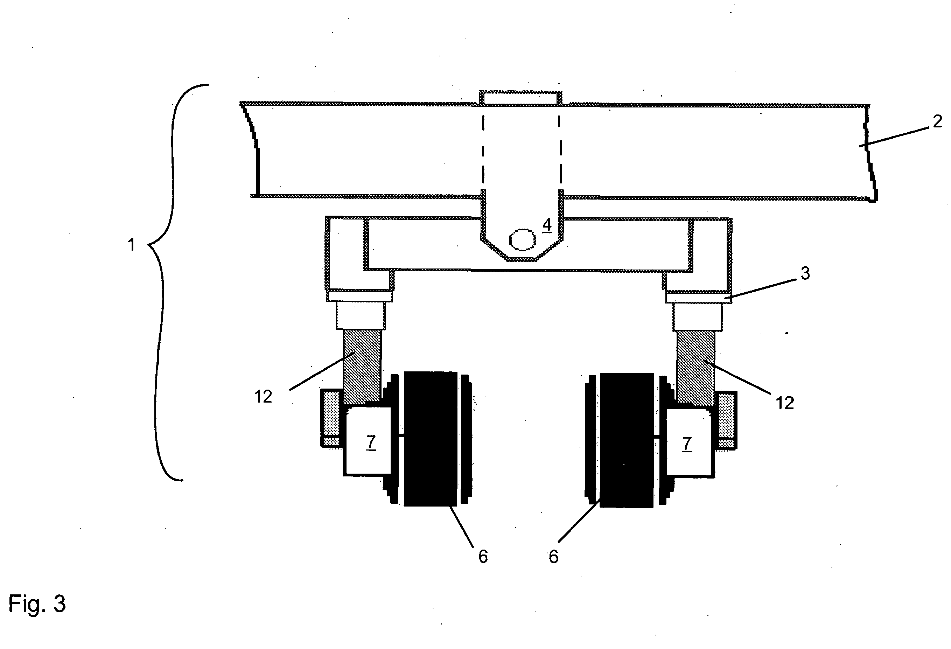

Die Figur 3 zeigt eine weitere Ausführungsform einer Antriebseinheit 1 in einer anderen Darstellung. In dieser Darstellung sind die Motoren 7 als Direktmotoren ausgebildet, über die die Antriebsräder 6 auch gelagert sind. In der gezeigten Seitenansicht bildet das Fahrgestell 3 mit den Achsbeinen 12 eine u-förmige Form, wobei die Antriebsräder 6 platzsparend innerhalb des U's angeordnet sind.

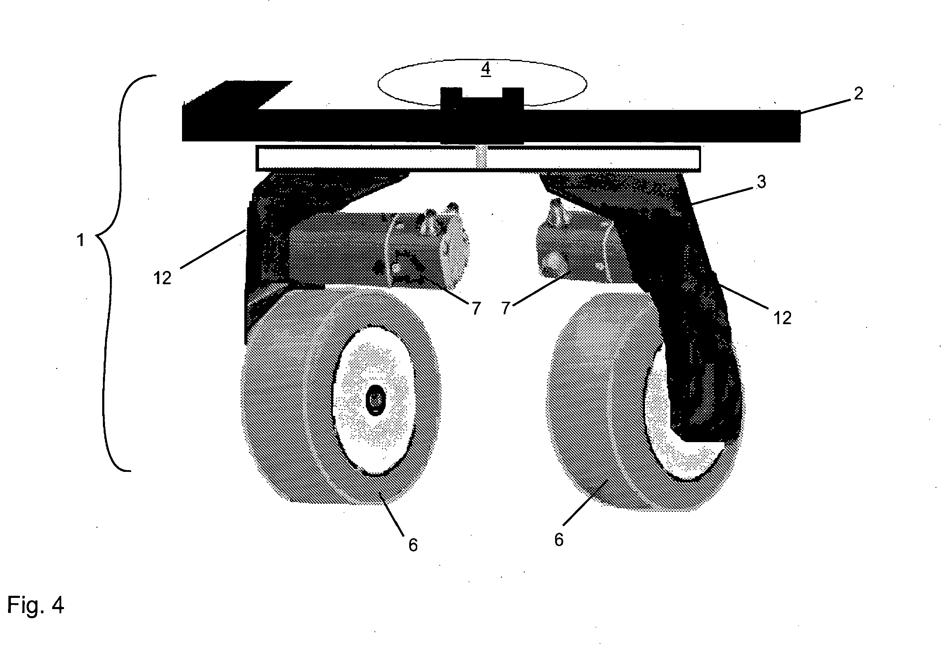

Die Figur 4 zeigt ein weiteres Ausführungsbeispiel der Erfindung, wobei auch hier die Antriebsräder 6 innerhalb eines Bereiches angeordnet sind, die durch die Achsbeine 12 gebildet sind. Die Motoren 7 sind bei dieser Ausführungsform über ein seitliches Getriebe 13 mit den Antriebsrädern gekoppelt.

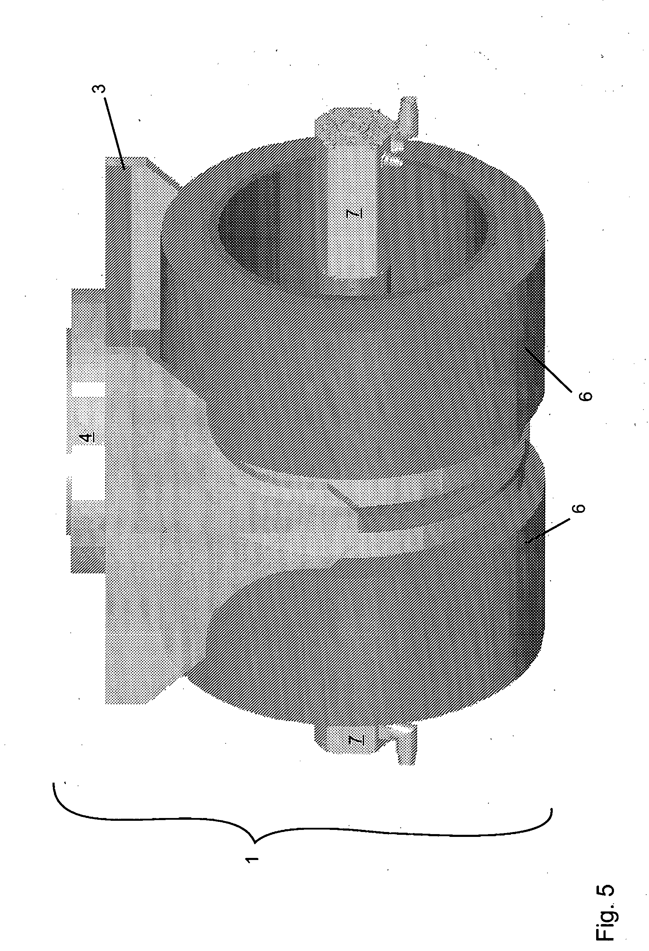

Figur 5 zeigt ein nächstes Ausführungsbeispiel der Antriebseinheit, wobei hier die Motoren 7 als Nabenmotoren ausgebildet sind. Besonders interessant ist hierbei, dass die Antriebsräder 6 unmittelbar benachbart zueinander angeordnet sind. Wie bei allen anderen Ausführungsformen erstreckt sich die Lenkachse 5 zwischen den Antriebsrädern 6. Bei manchen Ausführungsbeispielen kreuzen sich die die Lenkachse 5 und die Drehachse der Antriebsräder 6.

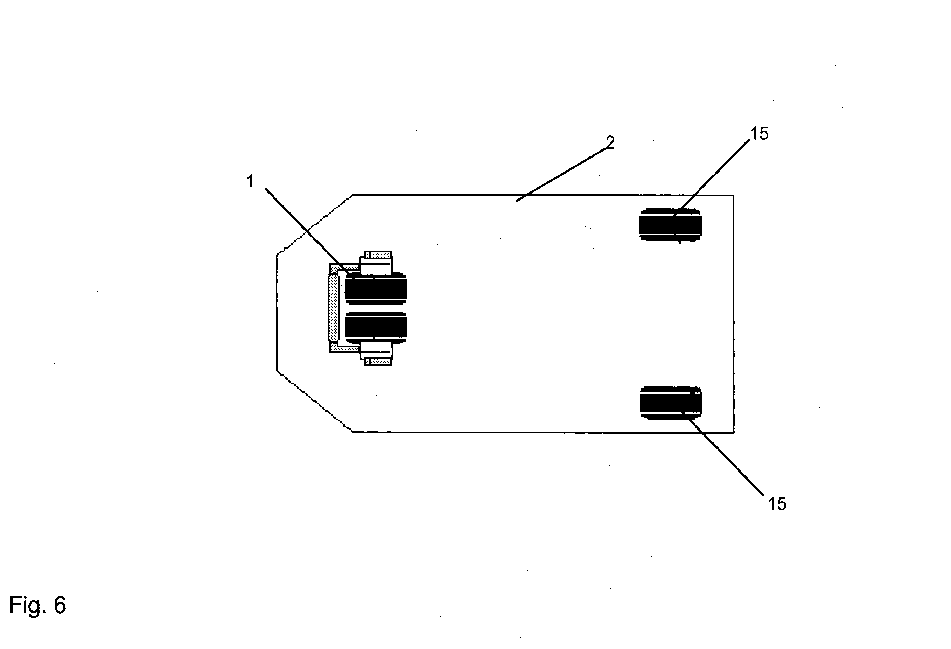

Die Figur 6 zeigt in einer Unteransicht eine Transportplattform 2, welche zur Steuerung und zur Lenkung eine Antriebseinheit 1 gemäß einer der vorhergehenden Figuren aufweist und ergänzend zwei Stützeinrichtungen 15, so das sich eine dreiecksförmige Abstützung der Transportplattform 2 ergibt. Für den Antrieb und für die Lenkung wird nur die Antriebseinheit 1 eingesetzt, die Stützeinrichtungen 15 sind als passive Fahrwerkskomponenten ausgebildet. Die Räder der Stützeinrichtung 15 können schwenkbar oder auch schwenkfest angeordnet sein.

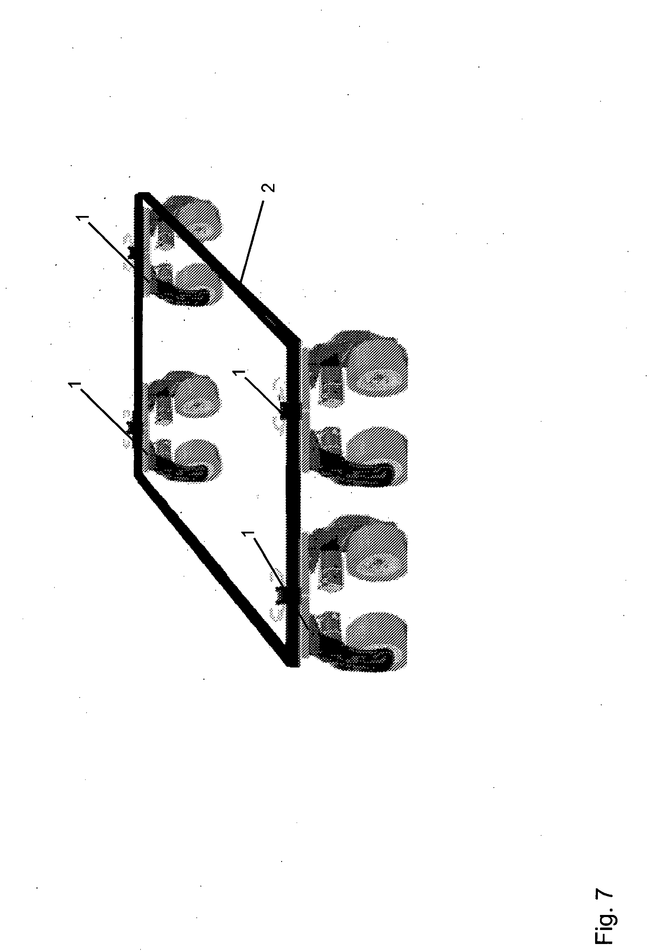

Die Figur 7 zeigt ein weiteres Ausführungsbeispiel einer Transportplattform 2, welche eine in etwa rechteckige Form aufweist, wobei in jedem Eckenbereich eine Antriebseinheit 1 angeordnet ist. Sämtliche Antriebseinheiten 1 sind mit einer gemeinsamen Steuereinrichtung 10 verbunden, die die Antriebseinheiten miteinander koordiniert, so dass die Antriebseinheiten 1 gemeinsam eine Geradeausfahrt, Kurvenfahrt oder eine Neuausrichtung der Antriebseinheiten 1 durchführen oder eine +/- 90° Drehung im Stillstand durchführen (Max. +130 bzw. -130°).

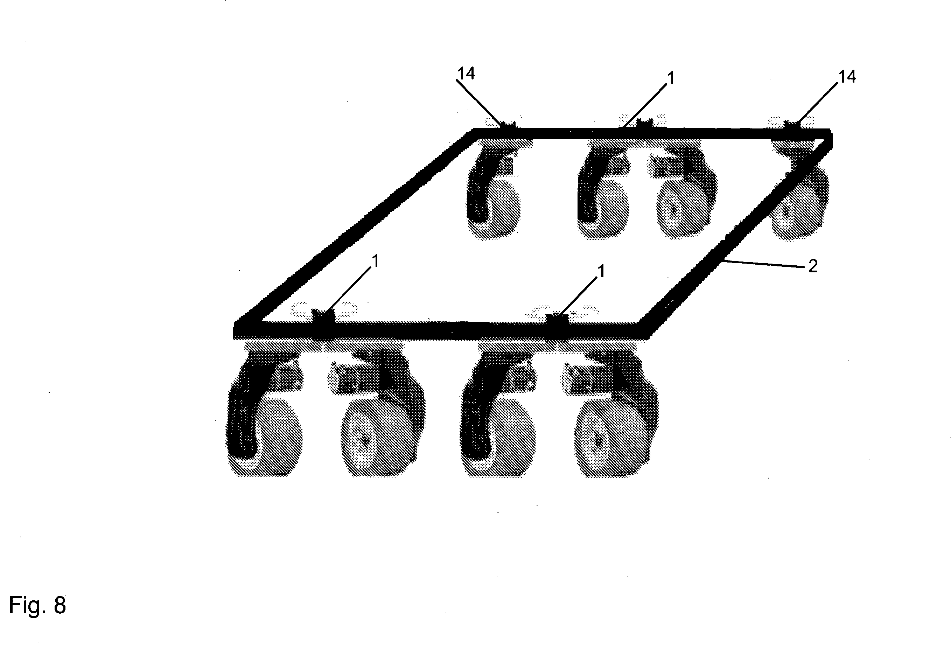

Die Figur 8 zeigt eine Abwandlung der Ausführungsform in der Figur 7, wobei diese Transportplattform 2 nur drei Antriebseinheiten 1 aufweist, die dreiecksförmig angeordnet sind und dafür zwei zusätzliche Stützeinrichtungen 14 zeigt, die in diesem Beispiel schwenkbar an der Transportplattform 2 angeordnet sind und damit als Lenkrollen ausgebbildet sind.

Die Räder der Stützeinrichtungen 14 sind zu den zugeordneten Schwenkachsen versetzt, angeordnet, um eine Schwenkung aus nahezu jeder Position zu ermöglichen, insbesondere durchstößt die Schwenkachse das zugeordnete Rad nicht. Bei abgewandelten Ausführungsformen können auch Bockrollen eingesetzt werden, die nicht schwenkbar sind.

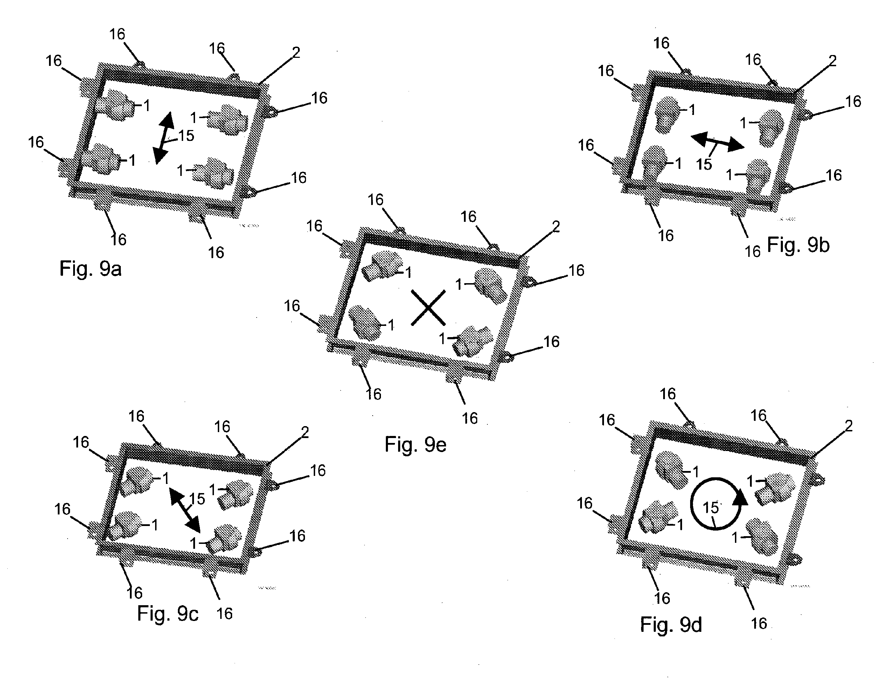

Die Figuren 9a bis 9d zeigen in einer schematischen dreidimensionalen Draufsicht mehrere der Transportplattformen 2, wobei die jeweiligen, nur schematisch angedeuteten Antriebseinheiten 1 verschiedene Schwenkwinkel einnehmen, um die Lenkungsfunktion zu demonstrieren. In der Figur 1 sind alle Antriebseinheiten 1 so orientiert, dass die Transportplattform in Richtung des Pfeils 15 verfahren werden kann. Bei den Figuren 9 b und c sind die Antriebseinheiten 1 demgegenüber jeweils um 90° bzw. ca. -30 verschwenkt, so dass der Pfeil 15 der möglichen Bewegungsrichtung in eine andere Richtung weist. In der Figur 9d sind die Antriebseinheiten 1 so ausgerichtet, dass die Transportplattform 2 auf der Stelle rotiert werden kann. Die Figur 9e zeigt dagegen eine Parkposition, da in der gezeigten Ausrichtung sich die Antriebseinheiten gegenseitig blockieren.

Durch an den Transportplattformen 2 angebrachte, mechanische Schnittstellen 16 können die Transportplattformen 2 miteinander gekoppelt werden, so dass eine Großplattform (nicht gezeigt) gebildet ist. Z.B. könnte aus den Transportplattformen in den Figuren 9a bis 9e eine Fünfer-Reihe als Großplattform gebildet werden. Bedarfsgerecht könnten auch nur zwei, drei oder vier der Transportplattformen 2 miteinander verbunden werden.

Die Steuereinrichtung 10 ist so ausgeführt, dass diese sämtliche Antriebseinheiten 1 der derart gebildeten Großplattform ansteuern kann, so dass z.B. die insgesamt 20 Antriebseinheiten 1 der Fünfer-Reihe mit der Steuereinrichtung 10 bedienbar ist.

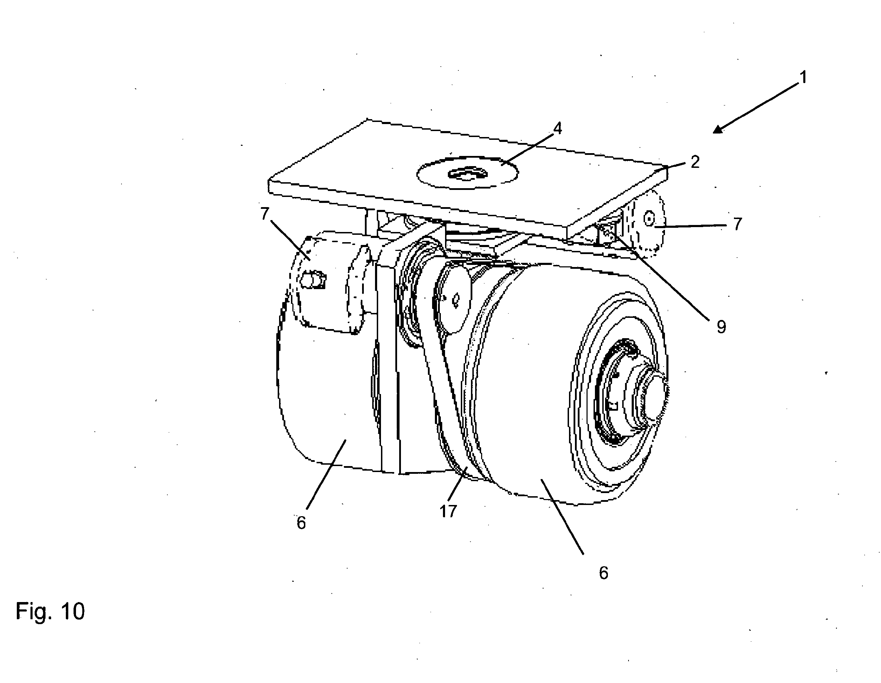

Die Figur 10 zeigt ein weiteres Ausführungsbeispiel der Erfindung einer Antriebseinheit, welche - z.B. im Vergleich mit der Figur 5 - mit einem Riemenantrieb mit Riemen 17 ausgestattet ist. Bei dieser Ausführungsform sind die Motoren 7 gleichgerichtet mit den Drehachsen der Antriebsräder 6 angeordnet, jedoch außermittig positioniert. Über die Riemen 17 wird das Antriebsdrehmoment von den Motoren 7 auf die Antriebsräder 6 übertragen, wobei jedem Antriebsrad 6 ein Riemen 17 und ein Motor 7 zugeordnet ist. Die Antriebseinheit 1 ist über die Antriebsaufnahme 4 in der Transportplattform 2 dreh- und/oder schwenkbar gelagert. Der Drehwinkelgeber 9 ist unter der Transportplattform 2 positioniert.

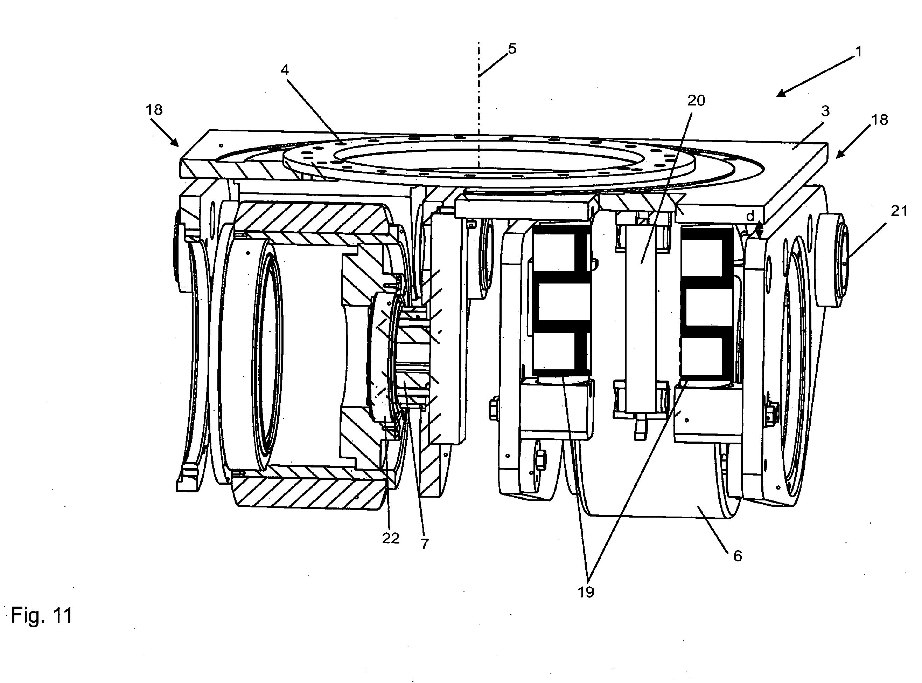

Die Figur 11 zeigt in einer schematischen dreidimensionalen Darstellung eine weitere Antriebseinheit 1 als ein Ausführungsbeispiel der Erfindung. In dieser Darstellung ist der rechte Teil in Draufsicht von vorne gezeigt, der linke Teil ist teilgeschnitten dargestellt. Die Antriebseinheit 1 kann über die Antriebsaufnahme 4, ausgebildet als Kopplungsring, mit der Transportplattform 2 gekoppelt werden, wobei die Antriebseinheit 1 dann um die zentral zu der Antriebsaufnahme 4 verlaufenden Lenkachse 5 drehbar ist.

Die Antriebseinheit 1 weist zwei Antriebsräder 6 auf, wobei nur das rechte Antriebsrad 6 dargestellt ist. Die Antriebsräder 6 sind als Walzen ausgebildet, deren Mantel aus einem Hartkunststoff oder Stahl gebildet ist. Insbesondere sind die Antriebsräder 6 in radialer Richtung an der Außenseite unelastisch und/oder starr ausgebildet. Die Antriebsräder 6 weisen beispielsweise einen Durchmesser von größer als 300 mm und eine Breite von ca. 150 mm auf. Die Antriebsräder 6 sind jeweils für eine Tragfähigkeit von mehr als 3 Tonnen, insbesondere mehr als 4 Tonnen ausgebildet. Die Antriebsräder 6 sind über zwei separate und einzeln zugeordnete Einzelradaufhängungen 18 in dem Fahrgestell 3 angeordnet. Somit ist dem einen Antriebsrad exklusiv eine der Einzelradaufhängungen 18 und dem anderen Antriebsrad exklusiv die andere Einzelradaufhängung 18 zugeordnet. Jede Einzelradaufhängung 18 weist eine Federungseinrichtung 19 und optional ergänzend eine Dämpfungseinrichtung 20 auf, so dass die beiden Antriebsräder 6 unabhängig voneinander insbesondere in Richtung der Längserstreckung der Lenkachse 5 einfedern können. Zur Umsetzung der Schwenkbewegung weisen die Einzelradaufhängungen 18 Schwenkachsen 21 auf, welche ortsfest in dem Fahrgestell 3 angeordnet sind, so dass die Einzelradaufhängungen 18 um die Schwenkachsen 21 schwenkbar sind und dadurch eine Einfederung der Antriebsräder 6 erlauben. Die Federungseinrichtungen 19 sowie die Dämpfungseinrichtung 20 verbinden das Fahrgestell 3 und die Einzelradaufhängung 18 an einem der Schwenkachse 21 gegenüberliegenden, offenen Ende, so dass die Einzelradaufhängung 18 in diesem Bereich um einen Wert d in Richtung des Fahrgestells einfedern kann.

Die Einzelradaufhängung 18 mit der Federungseinrichtung 19 und der Dämpfungseinrichtung 20 ermöglichen selbst bei Überfahren von Störkonturen einen stetigen Kontakt der beiden Antriebsräder 6 mit dem Untergrund, so dass die Antriebseinheit 1 stets kontrolliert und manövrierfähig ist. Bei einer Fehlfunktion der Federungseinrichtung 19 würde bei einem Überfahren einer Störkontur mit nur einem Antriebsrad 6 auch das andere Antriebsrad 6 mit hochgenommen werden und in der Luft hängen, so dass keine kontrollierte Antriebs- oder Lenkaktion mehr möglich ist.

Schematisch angedeutet ist der Motor 7, welcher für jedes Antriebsrad 6 an der nach innen und/oder zueinander gewandten Seite angeordnet ist. Der Motor 7 ist als ein bürstenloser Scheibenläufermotor ausgebildet, der sich durch eine kleine Baugröße, flache Bauform, hohe Leistung und großen Wirkungsgrad auszeichnet. Der Motor 7 ist mit einem Zykloidgetriebe 22 gekoppelt. Zykloidgetriebe bekannter Bauformen weisen einen Exzenter als Antrieb, eine Kurvenscheibe, die von dem Exzenter bewegt wird, sowie einen Bolzenring auf, wobei der Abtrieb üblicher Weise drehfest mit der Kurvenscheibe gekoppelt ist. In der vorliegenden Ausführung wurde ebenfalls der Motor 7 als Antrieb mit dem Exzenter gekoppelt, jedoch wird der Abtrieb durch den Bolzenring (nicht dargestellt) gebildet, welcher mit seiner Außenseite und gegebenenfalls unter Zwischenschaltung von Gehäuseteilen unmittelbar drehfest mit dem Antriebsrad 6 gekoppelt ist. Das Zykloidgetriebe zeichnet sich durch eine hohe Verschleißfestigkeit aus. Dadurch, dass das Antriebsrad 6 drehfest mit der Bolzenscheibe gekoppelt ist, ist das Gesamtsystem sehr störunanfällig gegenüber Verformungen des Antriebsrades 6.

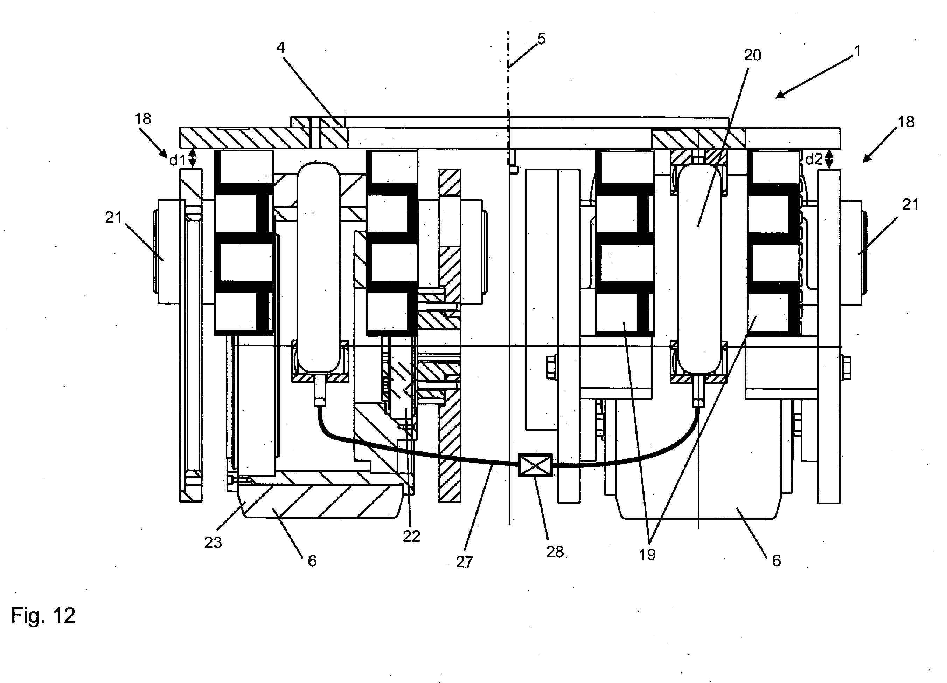

Die Figur 12 zeigt die Antriebseinheit 1 in einer frontalen Sicht, wobei in dieser Darstellung insbesondere die Distanz d zu erkennen ist, um die die Einzelradaufhängung 18 relativ zu dem Fahrgestell 3 und/oder relativ zueinander einfedern können. Zur Unterscheidung der beiden Federwege wird diese in der Figur 12 mit d1 und d2 bezeichnet. In der Schnittdarstellung ist zudem gut zu erkennen, dass die Antriebsräder 6 nur einen Hartkunststoffmantel 23 aufweisen, welcher eine Dicke von ca. 5 cm zeigt. Der innere Aufbau der Antriebsräder 6 ist dagegen durch eine Stahlfelge gebildet.

In der Figur 12 ist auch eine optionale Niveauregelung 27 gezeigt, die die beiden Dämpfungseinrichtungen 20 miteinander hydraulisch ggfs. unter Zwischenschaltung einer Ventilvorrichtung oder hydraulischen Pumpe 28 miteinander koppelt. Die Niveauregelung unterstützt die Einzelradaufhängung, so dass bei dem Überfahren einer Störkontur mit nur einem Antriebsrad 6 das Höhenniveau des anderen Antriebsrads 6 so geändert wird, dass dieses einen sicheren Bodenkontakt beibehält.

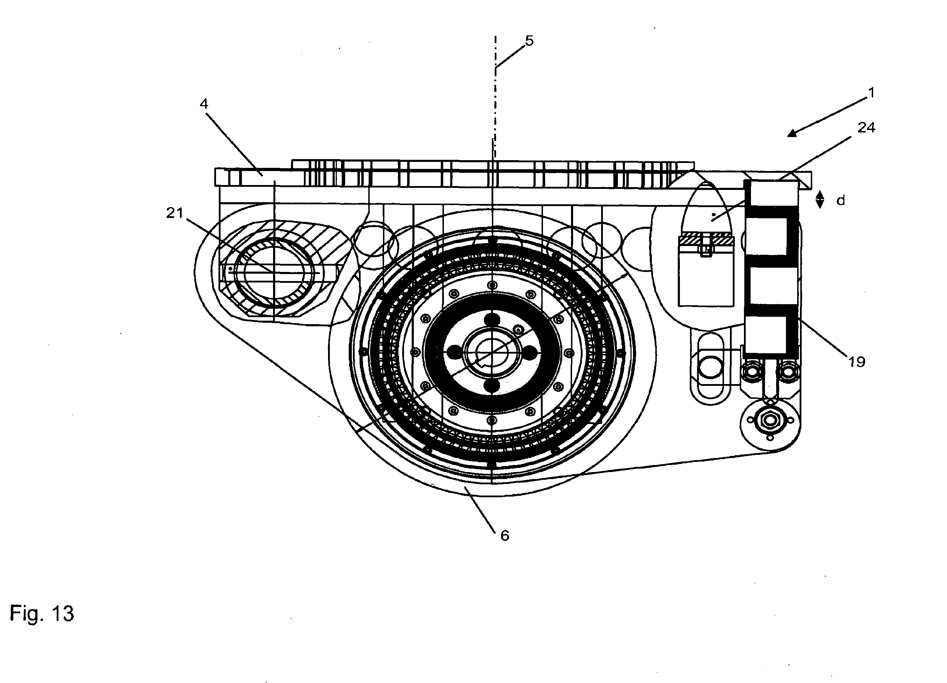

Die Figur 13 zeigt die Antriebseinheit 1 in einer seitlichen Ansicht, wobei nochmals gut zu erkennen ist, dass die Einzelradaufhängung 18 über die Schwenkachse 21 mit dem Fahrgestell 3 schwenkbar gekoppelt ist, wobei an den offenen Enden der Schwenkarme die Federungseinrichtung 19, ausgebildet als eine Spiralfeder aus Metall, angeordnet ist. Um ein Durchschlagen zu vermeiden, ist zudem ein Endpuffer 24 vorgesehen, welcher zwischen der Einzelradaufhängung 18 und dem Fahrgestell 3 wirkt.

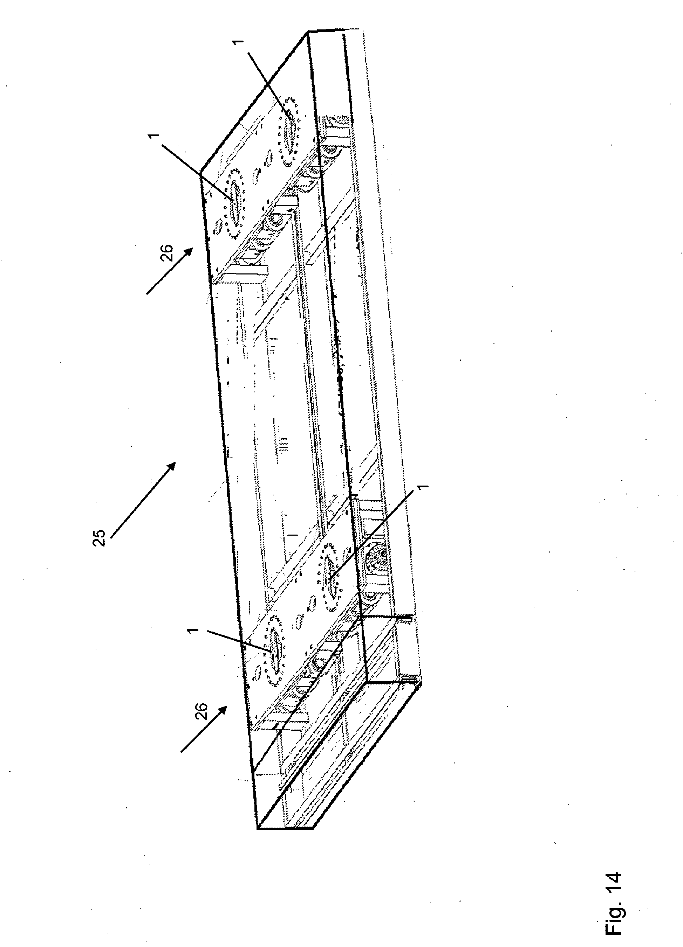

Die Figur 14 zeigt in einer stark schematisierten Darstellung ein Niederflurfahrzeug 25 bzw. dessen Grundrahmen, welcher aufgereiht an zwei Längsachsen 26 jeweils zwei Antriebseinheiten 1 aufweist. Jede dieser Antriebseinheiten 1 zeigt einen Aufbau, wie er beispielsweise in den Figuren 11 bis 13 dargestellt ist. Das Niederflurfahrzeug 25 weist eine Höhe von max. 650 mm, eine Breite von 2400 mm und eine Länge von 3200 mm in diesem Beispiel auf. Insbesondere die Breite und die Länge können beliebig gewählt werden. Es hat eine Tragfähigkeit für schwere Lasten von 35 Tonnen oder 40 Tonnen und erreicht eine Maximalgeschwindigkeit von 3,5 km/h oder 7 km/h, wobei die Höchstgeschwindigkeit lastabhängig parametrisierbar ist. Durch Einsatz von Zusatzachsen und/oder Stützrädern mit Lenkrollen oder Bockrollen können auch größere Lasten, insbesondere über 100 Tonnen umgesetzt werden. Jedes Antriebsrad 6 ist ausgelegt für eine Belastung von mindestens 4 Tonnen. Das Niederflurfahrzeug 25 ist durch die Antriebseinheiten 1 sowohl längs - als auch quer - als auch diagonal und in freien Kurven bewegbar. Es erlaubt zum Beispiel auch eine Kreisfahrt im Stand, sofern alle vier Antriebseinheiten 1 zugleich bewegt werden. Alternativ ist ein Vorderrad-, ein Hinterrad- oder ein Allradantrieb anwählbar.

Besonders zu unterstreichen ist es, dass das Niederflurfahrzeug 25 seine Bewegungsausrichtung im Stand z.B. um 90° ändern kann. Dies erlaubt es z.B. dass das Niederflurfahrzeug aus einer Warteschlange durch Umorientierung der Antriebseinheiten 1 in Richtung der Querachsen 26 senkrecht zu der Warteschlange ausgekoppelt oer ausgefahren werden kann. Die Umorientierung der Antriebseinheiten 1 erstreckt sich bei manchen Ausführungsformen in einem Winkelbereich von +/-130°, wobei 0° eine Geradeausfahrt senkrecht zu den Querachsen 26 entsprechen. In dem Winkelbereich von +/-130° ist die Fahrtrichtungseinstellung z.B. Geradeausfahrt oder Rückwärtsfahrt oder Querfahrtvorwärts oder Querfahrtrückwärts aus dem Stand in alle Richtungen 360° möglich.

Das Niederflurfahrzeug 25 weist einen aufladbaren Batteriesatz (Akkusatz) mit einer Kapazität zwischen 200 und 1600 Ah (oder einer beliebigen Kapazität) auf. Damit kann sich das Niederflurfahrzeug 25 autark über eine Strecke von mehreren 1000 Metern bewegen. Der Batteriesatz ist vorzugsweise aus wartungsfreien AGM-Batterien ausgebildet, welche in dem Niederflurfahrzeug 25 zwischen den beiden Querachsen 26 oder beliebig angeordnet sind.

Das Niederflurfahrzeug 25 wird vorzugsweise durch ein tragbares Steuerpult, insbesondere eine Fernbedienung, gesteuert, welche in einer beispielhaften Konfiguration einen Joystick zur Umsetzung der Funktion Fahren und einen Joystick zur Umsetzung der Funktion Lenken aufweist.

### Bezugszeichenliste

- 1: Antriebseinheit
- 2: Transportplattform
- 3: Fahrgestell
- 4: Antriebsaufnahme
- 5: Lenkachse
- 6: Antriebsräder
- 7: Motor
- 8: Feststelleinrichtung
- 9: Drehwinkelgeber
- 10: Steuereinrichtung
- 11: Stützräder
- 12: Achsbeine
- 13: Getriebe
- 14: Stützeinrichtungen
- 15: Pfeil
- 16: mechanisch Schnittstellen
- 17: Riemen
- 18: Einzelradaufhängungen
- 19: Federungseinrichtung
- 20: Dämpfungseinrichtung
- 21: Schwenkachsen
- 22: Zykloidgetriebe
- 23: Hartkunststoffmantel
- 24: Endpuffer
- 25: Niederflurfahrzeug
- 26: Querachsen
- 27: Niveauregelung

## Patentansprüche

1. Antriebseinheit (1) zum Antrieb einer Transportplattform (2) eines Transportsystems,
wobei die Antriebseinheit (1) umfasst:
• eine Antriebsaufnahme (4),
• ein Fahrgestell (3), wobei das Fahrgestell (3) über die Antriebsaufnahme (4) in der Transportplattform (2), insbesondere um eine Lenkachse (5), lenkbar lagerbar ist,
• mindestens zwei Antriebsräder (6), die in dem Fahrgestell (3) drehbar gelagert sind,
wobei die mindestens zwei Antriebsräder (6) mit unterschiedlichen Antriebsdrehmomenten beaufschlagt werden können,
wobei die Antriebseinheit (1) zur Lenkung der Transportplattform (2) durch die Beaufschlagung der mindestens zwei Antriebsräder (6) mit unterschiedlichen Antriebsdrehmomenten und/oder gegenläufig orientierten Antriebsdrehmomenten und/oder gegenläufig orientierten Drehrichtungen ausgebildet ist,
wobei den mindestens zwei Antriebsrädern (6) jeweils eine eigene Dämpfungs- und/oder Federvorrichtung (19,20) zugeordnet ist,
**dadurch gekennzeichnet, dass**
die Antriebsräder (6) als Hartwalzen ausgebildet sind, wobei der Shore A - Härtewert mehr als 85° beträgt.

2. Antriebseinheit (1) nach Anspruch 1, **gekennzeichnet durch** eine Niveauregelung, wobei die Niveauregelung ausgebildet ist, das Höhenniveau der mindestens zwei Antriebsräder (6) zueinander zu ändern.

3. Antriebseinheit (1) nach einem der vorhergehenden Ansprüche, **dadurch gekennzeichnet, dass** die mindestens zwei Antriebsräder (6) unabhängig voneinander mit unterschiedlichen Antriebsdrehmomenten beaufschlagt werden können und/oder getrennte mechanische Antriebsstränge aufweisen.

4. Antriebseinheit (1) nach einem der vorhergehenden Ansprüche, **dadurch gekennzeichnet, dass** jedem der mindestens zwei Antriebsräder (6) mindestens ein Motor (7) zur Beaufschlagung mit dem Antriebsdrehmoment zugeordnet ist, wobei die Motoren oder Antriebe (7) als Direktantriebs- und/oder Nabenmotoren und/oder Zykloidantriebe ausgebildet sind.

5. Antriebseinheit nach Anspruch 4, **dadurch gekennzeichnet, dass** der Zykloidantrieb eine Kurvenscheibe und eine daran abwälzende Bolzenringeinrichtung aufweist, wobei der Bolzenring als Abtrieb ausgebildet ist und/oder mit dem Antriebsrad (6) drehfest gekoppelt ist.

6. Antriebseinheit (1) nach einem der vorhergehenden Ansprüche, **gekennzeichnet durch** ein oder mehrere Stützräder (11), wobei das bzw. die Stützräder (11) gleichlaufend mit den Antriebsrädern (6) angeordnet ist bzw. sind.

7. Antriebseinheit (1) nach einem der vorhergehenden Ansprüche, **dadurch gekennzeichnet, dass** die Lenkachse (5) und die mindestens zwei Antriebsräder (6) derart angeordnet und/oder ausgebildet sind, dass durch ein gegenläufiges Drehen der mindestens zwei Antriebsräder (6) eine Schwenkung des Fahrgestells (3) um die Lenkachse (5) erzeugt wird.

8. Antriebseinheit (1) nach einem der vorhergehenden Ansprüche, **gekennzeichnet durch** eine Feststelleinrichtung (8), die ausgebildet ist, die Schwenkung des Fahrgestells (3) um die Lenkachse (5) zu blockieren.

9. Antriebseinheit (1) nach einem der vorhergehenden Ansprüche, **gekennzeichnet durch** einen Drehwinkelgeber (9), der ausgebildet ist, den Schwenkwinkel des Fahrgestells (3) und/oder der Antriebseinheit um die Lenkachse (5) zu erfassen.

10. Antriebseinheit (1) nach einem der vorhergehenden Ansprüche, **gekennzeichnet durch** eine Steuereinrichtung (10), die programmtechnisch und/oder schaltungstechnisch ausgebildet ist, die Antriebseinheit (1) für einen Antriebsvorgang und für einen Lenkvorgang der Transportplattform (2) anzusteuern.

11. Transportsystem mit mindestens einer Transportplattform (2), **dadurch gekennzeichnet, dass** die Transportplattform (2) mindestens eine der Antriebseinheiten (1) der vorhergehenden Ansprüche umfasst.

12. Transportsystem nach Anspruch 11, **dadurch gekennzeichnet, dass** die Transportplattform als ein Schwertransporter, insbesondere als ein Niederflurfahrzeug und/oder als ein Niederflurfahrzeugrahmen ausgebildet ist.

13. Transportsystem nach Anspruch 11 oder 12, **dadurch gekennzeichnet, dass** die Transportplattform (2) passive Stützradeinheiten (14, 15) aufweist.

14. Transportsystem nach einem der vorhergehenden Ansprüche, **dadurch gekennzeichnet, dass** die Transportplattform (2) mehrere Antriebseinheiten (1) nach einem der vorhergehenden Ansprüche aufweist, welche gemeinsam durch eine Steuereinrichtung (10) angesteuert werden, wobei die Steuereinrichtung (10) programmtechnische und/oder schaltungstechnisch ausgebildet ist, die mehreren Antriebseinheiten (1) für einen Antriebsvorgang und für einen Lenkvorgang der Transportplattform anzusteuern.

15. Transportsystem nach einem der vorhergehenden Ansprüche, **dadurch gekennzeichnet, dass** die Transportplattformen (2) mechanische Schnittstellen (16) zur gegenseitigen Kopplung aufweisen, um gemeinsam eine Großplattform zu bilden.

16. Transportsystem nach einem der vorhergehenden Ansprüche, **gekennzeichnet durch** mehrere Transportplattformen (2), jeweils mit mindestens einer der Antriebseinheiten (1), wobei die Transportplattformen (2) miteinander mechanisch und/oder virtuell zu einer Großplattform koppelbar sind und wobei eine der Steuereinrichtungen (10) als Mastersteuereinrichtung ausgebildet ist, die Antriebseinheiten (1) der mehreren Transportplattformen (2) für einen Antriebsvorgang und für einen Lenkvorgang der Großplattform anzusteuern.

## Claims

1. A drive unit (1) for driving a transport platform (2) of a transport system,
wherein the drive unit (1) comprises:
• a drive mounting (4),
• a chassis (3), wherein the chassis (3) can be mounted in the transport platform (2) by means of the drive mounting (4) so as to be steerable, in particular about a steering axis (5),
• at least two driving wheels (6) which are rotatably mounted in the chassis (3), wherein the at least two driving wheels (6) can be supplied with different drive torques,
wherein the drive unit (1) is designed to steer the transport platform (2) when the at least two driving wheels (6) are supplied with different drive torques and/or drive torques that work in opposite directions and/or opposite rotational directions,
wherein the at least two driving wheels (6) are each assigned their own dampening and/or spring device (19, 20),
**characterized in that**
the driving wheels (6) are designed as hard rollers, wherein the shore A hardness value is more than 85°.

2. The drive unit (1) according to Claim 1, **characterized by** a levelling adjustment system, wherein the levelling adjustment system is designed to amend the level of the at least two driving wheels (6) with respect to each other.

3. The drive unit (1) according to any one of the preceding claims, **characterized in that** the at least two driving wheels (6) can be supplied with different drive torques independently of each other and/or have separate mechanical drive trains.

4. The drive unit (1) according to any one of the preceding claims, **characterized in that** at least one motor (7) for supplying the drive torque is assigned to each of the at least two driving wheels (6), wherein the motors or drives (7) are designed as direct drive and/or hub motors and/or cycloid drives.

5. The drive unit according to Claim 4, **characterized in that** the cycloid drive has a cam disk and a bolt ring device passing thereon, wherein the bolt ring is designed as a power take-off and/or is coupled to the driving wheel (6) in a non-rotational manner.

6. The drive unit (1) according to any one of the preceding claims, **characterized by** one or more support wheels (11), wherein the support wheel or wheels (11) is or are arranged parallel with the driving wheels (6).

7. The drive unit (1) according to any one of the preceding claims, **characterized in that** the steering axis (5) and the at least two driving wheels (6) are arranged and/or designed such that a counter-rotation of the at least two driving wheels (6) generates a swivel of the chassis (3) about the steering axis (5).

8. The drive unit (1) according to any one of the preceding claims, **characterized by** a locking device (8) which is designed to block the swivel of the chassis (3) about the steering axis (5).

9. The drive unit (1) according to any one of the preceding claims, **characterized by** a rotation angle sensor (9) which is designed to capture the swivel angle of the chassis (3) and/or the drive unit about the steering axis (5).

10. The drive unit (1) according to any one of the preceding claims, **characterized by** a control device (10) which is designed, in terms of its programming and/or circuitry, to control the drive unit (1) for a drive operation and for a steering operation of the transport platform (2).

11. A transport system having at least one transport platform (2), **characterized in that** the transport platform (2) comprises at least one of the drive units (1) of the preceding claims.

12. The transport system according to Claim 11, **characterized in that** the transport platform is designed as a heavy truck, in particular as a low-floor vehicle and/or as a low-floor vehicle frame.

13. The transport system according to Claim 11 or 12, **characterized in that** the transport platform (2) comprises passive support wheel units (14, 15).

14. The transport system according to any one of the preceding claims, **characterized in that** the transport platform (2) has a plurality of drive units (1) according to any one of the preceding claims, which are jointly controlled by a control device (10), wherein the control device (10) is designed, in terms of its programming and/or circuitry, to control the plurality of drive units (1) for a drive operation and for a steering operation of the transport platform.

15. The transport system according to any one of the preceding claims, **characterized in that** the transport platforms (2) comprise mechanical interfaces (16) for coupling to each other, in order to jointly form a large platform.

16. The transport system according to any one of the preceding claims, **characterized by** a plurality of transport platforms (2), each having at least one of the drive units (1), wherein the transport platforms (2) can be coupled to one another mechanically and/or virtually to form a large platform and wherein one of the control devices (10) is designed as a master control device to control the drive units (1) of the plurality of transport platforms (2) for a drive operation and for a steering operation of the large transport platform.

## Revendications

1. Unité d'entraînement (1) pour l'entraînement d'une plateforme de transport (2) d'un système de transport,
l'unité d'entraînement (1) comprenant :
• un logement d'entraînement (4),
• un châssis (3), le châssis (3) pouvant être supporté de façon dirigeable par le biais du logement d'entraînement (4) dans la plateforme de transport (2), en particulier autour d'un essieu directeur (5),
• au moins deux roues d'entraînement (6) qui sont supportées en rotation dans le châssis (3),
les au moins deux roues d'entraînement (6) pouvant être alimentées avec différents couples d'entraînement,
l'unité d'entraînement (1) étant constituée pour le braquage de la plateforme de transport (2) par l'alimentation des au moins deux roues d'entraînement (6) avec différents couples d'entraînement et/ou des couples d'entraînement orientés en sens contraire et/ou des directions de rotation orientées en sens contraire,
un propre dispositif d'amortissement et/ou de suspension (19, 20) étant respectivement affecté aux au moins deux roues d'entraînement (6),
**caractérisée en ce que**
les roues d'entraînement (6) sont constituées en tant que rouleaux durs, la valeur de dureté Shore A étant supérieure à 85°.

2. Unité d'entraînement (1) selon la revendication 1, **caractérisée par** une régulation de niveau, la régulation de niveau étant constituée pour modifier le niveau de hauteur des au moins deux roues d'entraînement (6) l'une par rapport à l'autre.

3. Unité d'entraînement (1) selon une des revendications précédentes, **caractérisée en ce que** les aux moins deux roues d'entraînement (6) peuvent être alimentées indépendamment l'une de l'autre avec différents couples d'entraînement et/ou présentent des chaînes cinématiques mécaniques séparées.

4. Unité d'entraînement (1) selon une des revendications précédentes, **caractérisée en ce que** au moins un moteur (7) destiné à l'alimentation avec le couple d'entraînement est affecté à chacune des aux moins deux roues d'entraînement (6), les moteurs ou entraînements (7) étant constitués en tant que moteurs à entraînement direct et/ou moteurs à moyeu et/ou entraînements cycloïdaux.

5. Unité d'entraînement selon la revendication 4, **caractérisée en ce que** l'entraînement cycloïdal présente une came et un dispositif de bague-cheville exécutant un mouvement de roulement par rapport à la came, la bague cheville étant constituée en tant qu'élément de sortie et/ou étant couplée, bloquée en rotation, à la roue d'entraînement (6).

6. Unité d'entraînement (1) selon une des revendications précédentes, **caractérisée par** une ou plusieurs roues d'appui (11), la ou respectivement les roues d'appui (11) étant disposée(s) de façon synchrone avec les roues d'entraînement (6).

7. Unité d'entraînement (1) selon une des revendications précédentes, **caractérisée en ce que** l'essieu directeur (5) et les aux moins deux roues d'entraînement (6) sont disposés et/ou constitués de telle sorte qu'un pivotement du châssis (3) autour de l'essieu directeur (5) est produit par une rotation synchrone des aux moins deux roues d'entraînement (6).

8. Unité d'entraînement (1) selon une des revendications précédentes, **caractérisée par** un dispositif d'immobilisation (8) qui est constitué pour bloquer le pivotement du châssis (3) autour de l'essieu directeur (5).

9. Unité d'entraînement (1) selon une des revendications précédentes, **caractérisée par** un capteur d'angle de rotation (9) qui est constitué pour détecter l'angle de pivotement du châssis (3) et/ou de l'unité d'entraînement autour de l'essieu directeur (5).

10. Unité d'entraînement (1) selon une des revendications précédentes, **caractérisée par** un dispositif de commande (10) qui est constitué, avec une technique de programmation et/ou une technique de circuit, pour piloter l'unité d'entraînement (1) en vue d'un processus d'entraînement et en vue d'un processus de braquage de la plateforme de transport (2).

11. Système de transport avec au moins une plateforme de transport (2), **caractérisé en ce que** la plateforme de transport (2) comprend au moins une des unités d'entraînement (1) des revendications précédentes.

12. Système de transport selon la revendication 11, **caractérisé en ce que** la plateforme de transport (2) est constituée en tant que moyen de transport de charges lourdes, en particulier en tant que véhicule à plancher surbaissé et/ou en tant que cadre de véhicule à plancher surbaissé.

13. Système de transport selon la revendication 11 ou 12, **caractérisé en ce que** la plateforme de transport (2) présente des unités de roues d'appui (14, 15) passives.

14. Système de transport selon l'une des revendications précédentes, **caractérisé en ce que** la plateforme de transport (2) présente plusieurs unités d'entraînement (1) selon l'une des revendications précédentes qui sont pilotées conjointement par un dispositif de commande (10), le dispositif de commande (10) étant constitué avec une technique de programmation et/ou une technique de circuit pour piloter les plusieurs unités d'entraînement (1) en vue d'un processus d'entraînement et en vue d'un processus de braquage de la plateforme de transport.

15. Système de transport selon l'une des revendications précédentes, **caractérisé en ce que** les plateformes de transport (2) présentent des interfaces (16) mécaniques pour l'accouplement réciproque afin de former conjointement une grande plateforme.

16. Système de transport selon l'une des revendications précédentes, **caractérisé par** plusieurs plateformes de transport (2), respectivement avec au moins une des unités d'entraînement (1), les plateformes de transport (2) pouvant être couplées les unes aux autres mécaniquement et/ou virtuellement pour fournir une grande plateforme, et un des dispositifs de commande (10) étant constitué en tant que dispositif de commande maître pour piloter les unités d'entraînement (1) des plusieurs plateformes de transport (2) en vue d'un processus d'entraînement et en vue d'un processus de braquage de la grande plateforme.
